# FASCICULE DE BREVET EUROPEEN

(11) **EP 1 223 104 B1**
(45) Date de publication et mention de la délivrance du brevet: **26.09.2007**
(21) Numéro de dépôt: 01403326.0
(22) Date de dépôt: 20.12.2001
(51) Int. Cl.: B64G 1/28

(54) **Procédé de guidage d'un système d'actionneurs gyroscopiques**
Leitverfahren für einen Momentregelungsgyroskop
Guiding process for a gyroscopic moment control system

(30) Priorité: 15.01.2001 FR 0100462
(43) Date de publication de la demande: 17.07.2002
(73) Titulaire: THALES, 92200 Neuilly-sur-Seine (FR)
(72) Inventeur: Salenc, Cédric, 06610 Le Canne (FR)
(74) Mandataire: Esselin, Sophie

(56) Documents cités:
- FR-A- 2 786 283
- FR-A- 2 796 172
- KUHNS M D, RODRIGUEZ A A: "A Preferred Trajectory Tracking Steering Law for Spacecraft with Redundant CMGs" PROCEEDINGS OF THE 1995 AMERICAN CONTROL CONFERENCE, vol. 5, juin 1995 (1995-06), pages 3111-3115, XP002179400
- KUHNS MARK D ET AL: "Singularity Avoidance Control Laws for a Multiple CMG Spacecraft Attitude Control System" PROCEEDINGS OF THE AMERICAN CONTROL CONFERENCE, XX, XX, vol. 3, no. 3, 1994, pages 2892-2893, XP002107732
- VADALI S R, OH H-S, WALKER S R: "Preferred Gimbal Angles for Single Gimbal Control Moment Gyros" JOURNAL OF GUIDANCE, CONTROL AND DYNAMICS, vol. 13, no. 6, novembre 1990 (1990-11) - décembre 1990 (1990-12), pages 1090-1095, XP001024700
- HARUHISA KUROKAWA: "Constrained Steering Law of Pyramid-Type Control Moment Gyros and Ground Tests" JOURNAL OF GUIDANCE AND CONTROL AND DYNAMICS, AIAA. NEW YORK, US, vol. 20, no. 3, mai 1997 (1997-05), pages 445-449, XP002112653 ISSN: 0731-5090
- VADALI S R ET AL: "SUBOPTIMAL COMMAND GENERATION FOR CONTROL MOMENT GYROSCOPES AND FEEDBACK CONTROL OF SPACECRAFT" JOURNAL OF GUIDANCE AND CONTROL AND DYNAMICS, AIAA. NEW YORK, US, vol. 18, no. 6, 1 novembre 1995 (1995-11-01), pages 1350-1354, XP000558647 ISSN: 0731-5090

## Description

L'invention concerne les systèmes d'actionneurs gyroscopiques utilisés dans les satellites, et plus spécifiquement, une loi de guidage d'un système d'actionneurs gyroscopiques.

On utilise dans les satellites des systèmes d'actionneurs gyroscopiques, qui sont constitués de plusieurs roues cinétiques entraînées en rotation. Les axes des roues sont montés sur des cardans. Chaque actionneur conserve son moment cinétique constant en amplitude et génère un couple en modifiant la direction de son moment cinétique dans le repère satellite, à l'aide du cardan. Les mouvements des cardans du système provoquent une variation du moment cinétique total du système; de telles variations permettent de contrôler l'attitude du satellite. On parle donc dans la suite indifféremment de variation d'attitude ou de variation de moment cinétique; ce dernier terme serait toutefois le terme le plus approprié lorsque l'on ne considère que le système d'actionneurs indépendamment d'un satellite.

On appelle dans ce contexte moment cinétique d'un actionneurs, de façon connue en soi, un vecteur dont la direction est celle de l'axe de rotation de l'actionneur, et dont l'intensité est égale au produit du moment d'inertie de l'actionneur par la vitesse de rotation. Le sens du moment cinétique est donné par une convention liée à l'orientation du repère dans l'espace. Le moment cinétique d'un système d'actionneurs est égal à la somme vectorielle des moments cinétiques des différents actionneurs.

Un problème rencontré dans de tels systèmes d'actionneurs gyroscopiques est celui des configurations singulières ou singularités du système. On appelle "singularité interne" une configuration des actionneurs; dans laquelle le moment cinétique n'est pas maximal, mais dans laquelle il n'est pas possible d'augmenter le moment cinétique sans violation d'une contrainte; la contrainte est typiquement une limite sur la vitesse de rotation du cardan d'un actionneur. Dans une loi de guidage fournissant une commande en vitesse angulaire des cardans des actionneurs en fonction du couple ou du moment cinétique souhaité, par inversion d'une matrice, une singularité s'explique analytiquement par un déterminant de matrice qui tend vers zéro; ceci provoque une commande en vitesse qui tend vers l'infini, et donc une saturation des moteurs de basculement.

On appelle "singularité externe" une configuration dans laquelle le moment cinétique du système d'actionneurs est maximal dans une direction; typiquement, une telle singularité est atteinte lorsque tous les moments cinétiques de tous les actionneurs sont colinéaires et de même sens, ou lorsque les composantes des moments cinétiques de tous les actionneurs suivant un axe donné sont maximales.

On considère l'exemple d'un système constitué de quatre actionneurs; pour un tel système, une singularité interne possible est obtenue lorsque les moments cinétiques de tous les actionneurs sont dans une même direction, avec les moments de trois actionneurs dans un sens et le moment du quatrième actionneur dans l'autre sens. On comprend que dans une telle configuration, pour augmenter encore le moment cinétique du système d'actionneurs, il est nécessaire de retourner l'axe du quatrième actionneur. Un tel retournement induit des composantes perpendiculaires à la direction des actionneurs; un retournement brutal risque de violer une contrainte sur la vitesse de rotation d'un cardan d'actionneur. Le passage par une singularité n'est donc pas souhaitable pour le pilotage d'attitude d'un satellite : soit il induit des composantes de moment cinétique non désirées, soit il conduit à une violation d'une contrainte sur les mouvements des actionneurs.

Il n'est manifestement pas possible d'éviter les singularités externes d'un système d'actionneurs - puisque ces singularités sont provoquées par les limitations intrinsèques au système. Il est toutefois souhaitable d'éviter les singularités internes. Ce problème se rencontre notamment lorsque le système d'actionneurs est utilisé pour le pilotage d'attitude d'un satellite. On utilise dans la suite le terme singularité pour désigner les singularités internes du système d'actionneurs.

FR-A-2 786 283 décrit un procédé de pilotage de l'attitude d'un satellite, par commande de la vitesse des cardans de girodynes d'une grappe de girodynes. Ce document propose de déterminer à partir de conditions initiale et finale en terme d'attitude / vitesse angulaire / temps un configuration de grappe éloignée de toute configuration singulière, et telle que l'échange de moment cinétique provoque la manoeuvre désirée. Ce document propose ensuite d'amener de façon simultanée et indépendante l'orientation de chaque cardan dans son orientation de consigne, grâce à une consigne de position angulaire, envoyée en boucle ouverte dans l'asservissement local en position angulaire des cardans. Selon ce document, la consigne en boucle ouverte est quasi-instantanée par rapport au temps de réponse de l'asservissement en boucle fermée du système de contrôle d'attitude. Cette solution induit néanmoins des perturbations dans le guidage d'attitude du satellite; de fait, la précision de la position angulaire des cardans peut valoir quelques microradians; une boucle ouverte, même de durée faible, a des incidences sur la précision du guidage. En outre, cette solution implique un temps de tranquillisation important; les perturbations provoquées par l'application de la consigne d'angle en boucle ouverte sont encore sensibles à la fin du changement d'attitude. Enfin, cette solution implique, pour une stratégie de guidage donnée, des actionneurs gyroscopiques susceptibles de supporter une vitesse cardans élevée - autrement dit présentant un couple de sortie élevé.

La section d'état de la technique de ce document fait état d'un procédé de guidage local; ce procédé ne permet pas d'éviter les singularités. Il est encore fait état d'un guidage global continu, par calcul de la meilleure trajectoire de reconfiguration avant chaque manoeuvre; ce procédé implique un calcul trop important pour qu'il puisse être embarqué; il est donc nécessaire de procéder au calcul au sol, puis de télécharger les résultats du calcul.

Il existe donc un besoin d'une solution de guidage d'un système d'actionneurs gyroscopiques, qui permette d'éviter les singularités internes, n'induise pas ou peu de perturbations sur l'attitude et qui pour une variation d'attitude donnée n'implique pas de surdimensionnement du système d'actionneurs.

En résumé, dans un mode de réalisation de l'invention, il est proposé d'identifier un nombre fini de configuration de référence, permettant l'ensemble des manoeuvres possibles. Comme ce nombre est fini, on peut stocker un nombre également fini de trajectoires continues et précalculées, qui permettent de passer d'une configuration de référence à une autre. Pour une manoeuvre, il suffit alors d'identifier une configuration de référence permettant la manoeuvre, puis si nécessaire de passer d'une configuration actuelle à la configuration de référence identifiée, à l'aide d'une trajectoire calculée à l'avance. Il est ainsi possible avant une manoeuvre de passer d'une configuration pouvant provoquer une singularité lors de la manoeuvre à une autre configuration au voisinage de laquelle la manoeuvre peut être effectuée sans risque de singularité.

Plus spécifiquement, l'invention propose un procédé de guidage d'un système d'actionneurs gyroscopiques selon la revendication 1.

De préférence, le système d'actionneurs gyroscopiques est piloté par un système de contrôle en boucle fermé, et l'étape de passage s'effectue en injectant un profil en dans le système de contrôle.

Le profil peut être défini par des vitesses des cardans des actionneurs gyroscopiques, par des couples des moteurs des cardans des actionneurs gyroscopiques ou encore par des intensité des courants appliqués aux moteurs des cardans des actionneurs gyroscopiques.

Dans un mode de réalisation, le profil présente une vitesse des cardans des actionneurs nulle en début comme en fin de profil. On peut aussi prévoir qu'un profil présente une accélération des cardans des actionneurs nulle en début comme en fin de profil. Il est encore avantageux que le profil présente une vitesse des cardans des actionneurs croissante puis décroissante, la vitesse atteignant la vitesse maximale admise dans le système d'actionneurs gyroscopiques. Dans ce cas, il est avantageux que, l'accélération maximale admise dans le système d'actionneurs gyroscopiques soit atteinte lorsque la vitesse est croissante et lorsque la vitesse est décroissante.

L'étape de passage peut s'effectuer en même temps que le début de la génération du moment cinétique; elle peut aussi présenter une durée inférieure à 20%, de préférence inférieure à 10% de la durée de génération du moment cinétique.

L'invention propose aussi un satellite présentant les caractéristiques de la revendication 12.

De préférence, le satellite présente un système de contrôle en boucle fermée pour le système d'actionneurs gyroscopiques et une entrée en boucle ouverte appliquant un des profils au système d'actionneurs gyroscopiques.

Le profil stocké dans le satellite peut être défini par des vitesses des cardans des actionneurs gyroscopiques, par des couples des moteurs des cardans des actionneurs gyroscopiques ou encore par des intensité des courants appliqués aux moteurs des cardans des actionneurs gyroscopiques.

D'autres caractéristiques et avantages de l'invention apparaîtront à la lecture de la description qui suit de modes de réalisation de l'invention, donnés à titre d'exemple et en référence aux dessins annexés, qui montrent
- figure 1, une représentation schématique d'un système d'actionneurs gyroscopiques;
- figures 2 à 4, des enveloppes de moment cinétique pour des configurations de référence du système de la figure 1;
- figures 5 à 10, des coupes dans différents plans des enveloppes des figures 2 à 4;
- figure 11, un graphe du profil de guidage en position d'un actionneur gyroscopique;
- figure 12, un graphe de vitesse du profil de la figure 11 ;
- figure 13, un graphe de l'accélération du profil de la figure 11 ;
- figure 14, un graphe de la dérivée troisième du profil de la figure 11;
- figure 15, une représentation schématique de la boucle de commande de l'actionneur.

Dans la suite de la description, pour la clarté de l'explication, l'invention est décrite en référence à un système d'actionneurs gyroscopiques présentant un moment cinétique nul au repos; il ne s'agit que d'un exemple de configuration classique d'un système d'actionneurs gyroscopiques. L'invention peut s'appliquer aussi à un système d'actionneurs gyroscopiques présentant toujours un moment cinétique non nul.

Dans une configuration donnée des actionneurs d'un système d'actionneurs gyroscopiques, il existe des valeurs maximales du moment cinétique du système d'actionneurs qui peuvent être atteintes sans passer par une singularité interne. Il est donc possible, pour une configuration C donnée du système d'actionneurs gyroscopiques présentant un moment cinétique nul, de définir dans l'espace des directions dites "libres" ou sans singularités : à partir de la configuration C donnée, on peut atteindre un moment cinétique maximal dans une direction libre, sans passer par une singularité interne.

On détermine ensuite un nombre de configurations Cᵢ, appelées dans la suite configurations de référence, qui sont telles que l'ensemble des directions libres recouvre toutes les directions possibles. Autrement dit, pour toute direction possible du moment cinétique; il existe une configuration de référence à partir de laquelle un moment cinétique maximal dans cette direction possible peut être atteint sans passer par une singularité.

Une fois les configurations de référence définies, toute manoeuvre - c'est-à-dire tout choix d'une valeur de moment cinétique à générer - est possible à partir d'une configuration de référence. Pour une manoeuvre donnée, si le système d'actionneurs gyroscopiques n'est pas au voisinage d'une configuration de référence permettant la manoeuvre, le problème est de passer dans une autre configuration de référence, qui permet la manoeuvre.

L'invention repose sur la constatation qu'il suffit pour permettre toute manoeuvre sans risquer de singularités, de définir un nombre fini de configurations de référence. Comme le nombre de configurations de référence est fini, il n'existe qu'un nombre fini de passages possibles d'une configuration de référence à une autre. De ce fait, il suffit de définir à l'avance un nombre fini de profils permettant de passer d'une configuration de référence à une autre.

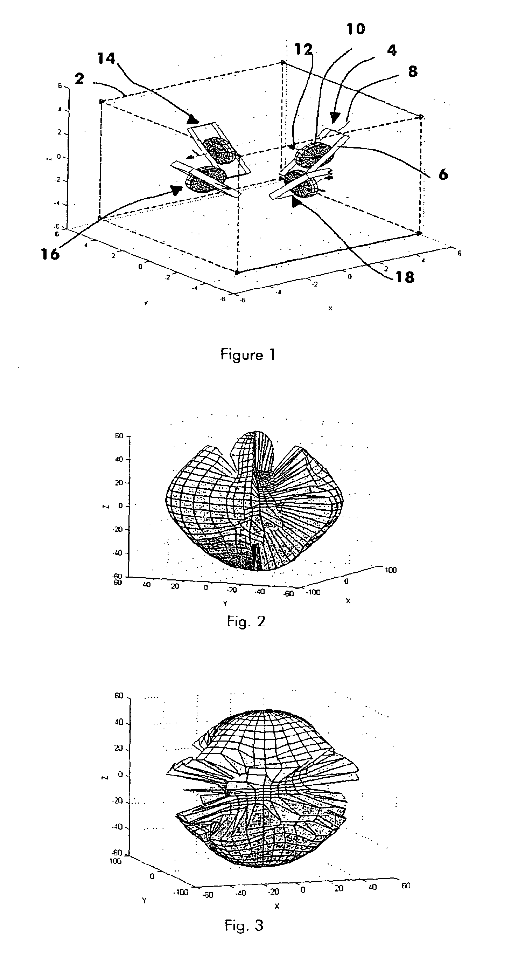

On décrit en référence à la figure 1 un exemple de système à quatre actionneurs gyroscopiques, avec trois configurations de référence et six profils. Un système de quatre actionneurs est une solution qui permet de générer toute direction du moment cinétique, tout en présentant une redondance. La figure 1 montre une représentation schématique du système d'actionneurs gyroscopiques. Est porté à la figure un repère orthonormé direct (x, y, z); le repère est dit direct en ce qu'il définit pour le moment cinétique une convention de sens: une rotation d'axe z qui amène l'axe x sur l'axe y est représentée par un vecteur qui est positif sur l'axe z. Sur la figure apparaît en traits pointillés la structure 2 du satellite. Les actionneurs sont disposés sur les faces d'une pyramide; pour la facilité d'explication, on a considéré une pyramide présentant un angle pyramidal de 45°; autrement dit, chaque face de la pyramide forme avec la verticale un angle de 45°. Le premier actionneur gyroscopique 4 présente un cardan 6 mobile en rotation autour d'un axe 8 ayant un vecteur directeur (1,0, 1). Dans la position représentée à la figure, la roue 10 portée par ce cardan 6 est entraînée en rotation dans le plan (x, z) dans le sens qui emmène le vecteur unitaire (1, 0, 0) vers le vecteur unitaire (0, 0, 1). Le moment cinétique présente donc une valeur positive suivant l'axe y, ce qui est représenté à la figure par le vecteur 12. Le vecteur moment cinétique présente des coordonnées (0, h, 0), avec h le produit du moment d'inertie de la roue 10 par la vitesse de rotation de cette roue.

Les autres actionneurs 14, 16 et 18 du système d'actionneurs gyroscopiques présentent des axes de rotation des cardans dont les directions respectives sont (0, 1, 1), (-1, 0, 1) et (0, -1 , 1). Dans la configuration représentée à la figure 1, les moments cinétiques des roues des quatre actionneurs 4, 14, 16 et 18 valent respectivement (0, h, 0), (-h, 0, 0), (0, -h, 0) et (h, 0, 0); on suppose ici que les quatre actionneurs sont identiques. La configuration de la figure est une configuration de moment cinétique total nul.

Pour cette configuration, la direction z est une direction libre. Autrement dit, il est possible d'atteindre un moment cinétique maximal le long de l'axe z, sans passer par une singularité interne : il suffit pour cela de faire tourner d'un quart de tour (90°) chacun des actionneurs, suivant l'axe de rotation du cardan. On obtient alors pour les actionneurs 4, 14, 16 et 18 des moments cinétiques présentant les coordonnées (-h/√2, 0, h/√2), (0, -h/√2, h/√2), (h/√2, 0, h/√×2) et (0, h/√2, h/√2). Le moment cinétique total vaut donc (0, 0, 4√2h).: il est maximal suivant l'axe z. On comprend que le passage depuis la configuration de la figure 1 vers la configuration avec un moment cinétique maximal suivant l'axe z peut s'effectuer avec:
- des composantes du moment cinétique constamment nulles suivant les directions x et y;
- une composante du moment cinétique suivant la direction z qui croît de façon monotone.

A l'inverse, pour la configuration de la figure 1, la direction x n'est pas une direction libre. De fait, pour atteindre un moment cinétique maximal suivant la direction x, il faudrait :
- faire tourner l'actionneur 4 d'un quart de tour pour qu'il présente un moment cinétique (h/√2, 0, -h/√2);
- retourner l'actionneur 14 pour qu'il présente un moment cinétique (h, 0, 0);
- faire tourner l'actionneur 16 d'un quart de tour pour qu'il présente un moment cinétique (h/√2, 0, h/√2); et
- ne pas faire bouger l'actionneur 18.

Il est clair que ces mouvements des actionneurs 4 et 16 opposés peuvent s'effectuer avec des composantes nulles suivant les directions y et z. Toutefois, la rotation de l'actionneur 14 génère un moment cinétique non nul suivant les axes y et z.

De même, la direction y n'est pas une direction libre pour la configuration du système d'actionneurs gyroscopiques représentée à la figure 1.

La configuration du système d'actionneurs gyroscopiques représentée à la figure 1 est donc adaptée lorsque l'on désire générer un moment cinétique dirigé suivant l'axe z, ou au voisinage de cet axe; en revanche, elle n'est pas adaptée comme configuration de départ si l'on désire générer un moment cinétique dirigé dans le plan (x, y). On peut donc considérer que les directions comprises dans un angle solide contenant l'axe z sont des directions libres pour la configuration de la figure 1. Un angle solide à l'intérieur d'un double cône de révolution d'axe z et d'angle au sommet 45° est adapté.

La configuration du système d'actionneurs gyroscopiques de la figure 1 est une configuration dans laquelle les moments cinétiques des actionneurs sont coplanaires, et dans laquelle des actionneurs opposés ont des moments cinétiques opposés. D'autres configurations avec un moment cinétique total nul sont possibles. Ces configurations peuvent être définies par les angles des cardans des différents actionneurs. Par convention, on peut considérer que les angles représentés à la figure 1 sont des angles nul. On oriente ensuite les axes des cardans vers le haut; dans ce cas, une rotation du cardan 6 d'un quart de tour, pour que l'actionneur présente un moment cinétique (-h/√2, 0, h/√2), est une rotation de +90°; inversement, une rotation du cardan 6 pour que l'actionneur présente un moment cinétique (h/√2, 0, - h/√2) est une rotation de -90°. Cette règle de signe des angles dérive de l'orientation du repère. Avec cette convention, les moments cinétiques des actionneurs sont les suivants, pour un angle α de rotation du cardan :
- pour l'actionneur 4 : (-sinα/√2, cosα, sinα/√2)
- pour l'actionneur 14 : (-cosα, -sinα/√2, sinα/√2)
- pour l'actionneur 16 : (sinα/√2, -cosα, sinα/√2)
- pour l'actionneur 18 : (cosα, sinα/√2, sinα/√2)

Avec ces conventions, on peut définir les configurations suivantes. Une configuration est obtenue pour les angles (α, -α, α, -α) des cardans des actionneurs 4, 14, 16 et 18, avec α un angle non nul et inférieur à 90°. Dans cette configuration, les moments cinétiques des actionneurs 4 et 16 sont dirigés vers le haut; la somme de leurs moments cinétiques est dirigée vers le haut suivant l'axe z. Les moments cinétiques des actionneurs 14 et 18 sont dirigés vers le bas et la somme de leurs moments cinétiques est dirigée vers le bas, suivant l'axe z. Le moment cinétique total est nul. Dans cette configuration, il est manifeste que la direction z n'est pas une direction libre. En revanche, la direction (1, 1, 0) est une direction libre : il est possible de faire varier les directions des actionneurs, de telle sorte que le moment cinétique total reste nul suivant les directions perpendiculaires (1, -1, 0) et z, et croisse en valeur absolue de façon monotone suivant la direction (1, 1, 0), pour atteindre sur cette direction une valeur maximale positive ou négative. Ceci est simplement obtenu à l'aide d'une loi permettant de passer d'une commande en attitude à une commande des quatre actionneurs; ceci se ramène à l'inversion d'une matrice rectangulaire. Cette inversion est possible dès lors que le déterminant est non nul - c'est-à-dire en l'absence de singularité. Une solution possible est d'utiliser la pseudo-inverse de Moore-Penrose. Cette solution est bien connue de l'homme du métier spécialiste des actionneurs gyroscopiques. Elle présente l'avantage de minimiser l'énergie pour atteindre un moment cinétique donné.

Une autre configuration est obtenue pour les angles (-α, α, -α, α), avec encore une fois α un angle non nul et inférieur à 90°. Dans cette configuration, les moments cinétiques des actionneurs 4 et 16 sont dirigés vers le bas; la somme de leurs moments cinétiques est dirigée vers le bas suivant l'axe z. Les moments cinétiques des actionneurs 14 et 18 sont dirigés vers le haut et la somme de leurs moments cinétiques est dirigée vers le haut, suivant l'axe z. Le moment cinétique total est nul. Dans cette configuration, il est encore manifeste que la direction z n'est pas une direction libre. En revanche, la direction (1, -1, 0) est une direction libre : il est possible de faire varier les directions des actionneurs, de telle sorte que le moment cinétique total reste nul suivant les directions perpendiculaires (1, 1, 0) et z, et croisse en valeur absolue de façon monotone suivant la direction (1, -1, 0).

Pour ces deux configurations, le choix de l'angle α dépend de la structure du système d'actionneurs gyroscopiques. Pour un système présentant des actionneurs sur les parois d'une pyramide, une valeur entre 30° et 60° est appropriée; pour un angle pyramidal de 30°, la valeur de α peut être choisie à 40°. Le choix d'un angle α donné dépend de la structure du système d'actionneurs, et notamment de l'angle pyramidal. En pratique, pour une configuration pyramidale, un choix de α légèrement supérieur à la valeur de l'angle pyramidal s'avère adapté; par exemple 10° de plus que l'angle pyramidal. Une valeur de α trop faible conduit des configurations C₊ ou C₋ avec des directions libres trop proches de celles de la configuration Cₒ; une valeur de α trop importante rapproche d'une configuration (90°, -90°, 90°, -90°) qui est une singularité interne.

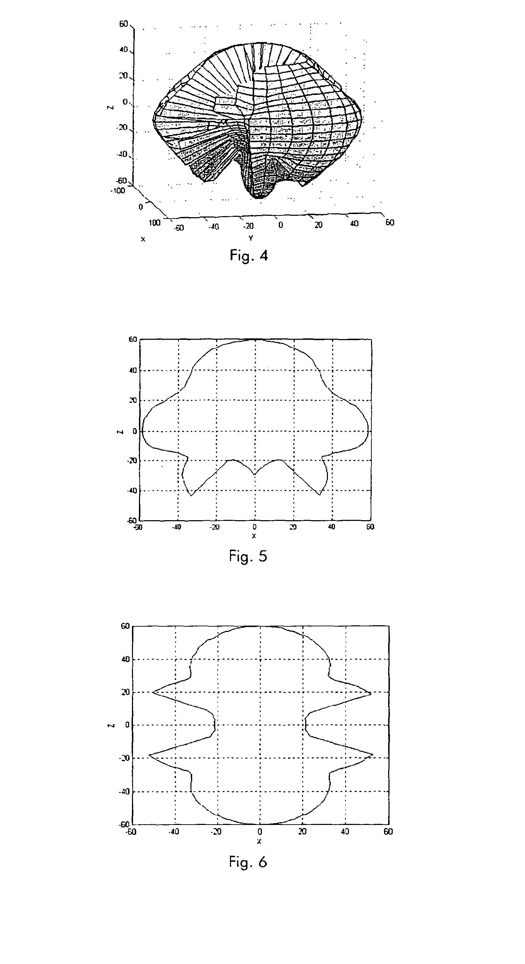

On définit ainsi trois configurations de référence C₀, C₊ et C₋, avec des angles respectifs (0, 0, 0, 0), (α, -α, α, -α) et (-α, α, -α, α). Les figures 4 à 10 montrent les directions libres pour chacune de ces configurations; pour les représentations des figures, on considère un système d'actionneurs gyroscopiques pyramidal, avec un angle pyramidal de 36° et un angle α de 45°. Les figures sont graduées en Nms, avec un moment cinétique H de 19 Nms par actionneur. Les figures 2 à 4 montrent des enveloppes de moment cinétique pour les configurations de référence C₋, Cₒ et C₊. Les enveloppes sont le lieu des points M de l'espace, avec dans chaque direction le vecteur OM̅ égal au vecteur de moment cinétique d'intensité la plus importante susceptible d'être atteint sans singularité. La figure 3 montre par exemple qu'il est possible dans la configuration Cₒ d'atteindre des moments cinétiques maximaux suivant la direction z, mais que les moments cinétiques atteints dans le plan (x, y) sont assez faibles. Inversement, la figure 4 montre que l'on atteint rapidement une singularité à partir de la configuration C₊, si l'on cherche à obtenir un moment cinétique dirigé vers l'axe z positif.

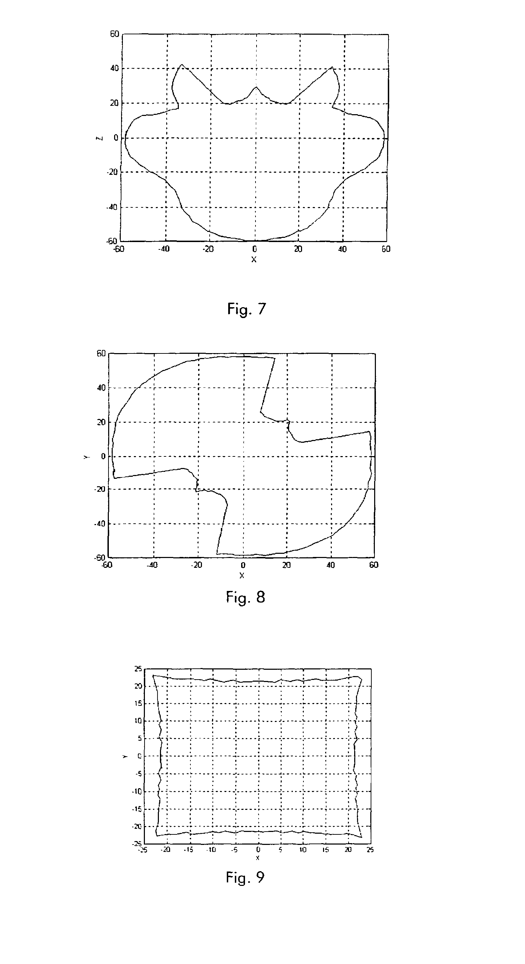

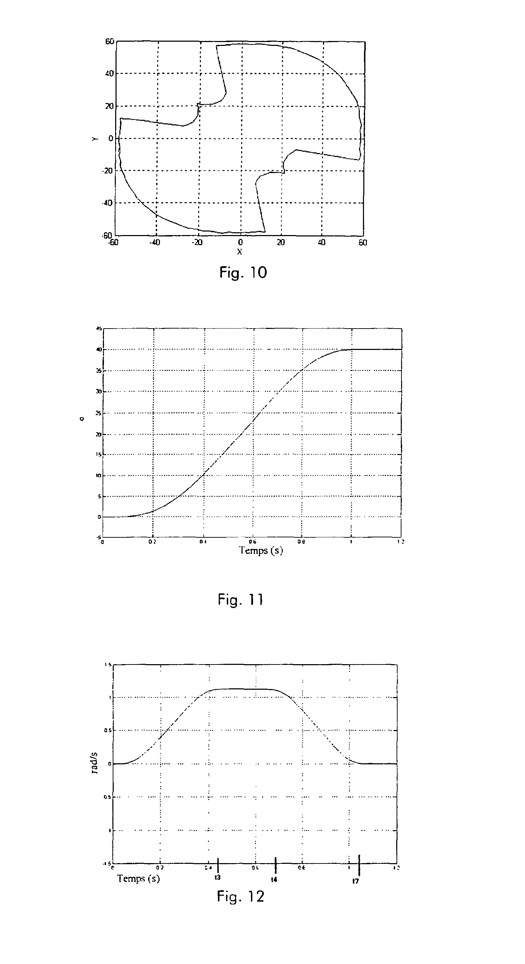

Les figures 5 à 7 montrent des vues en coupe des enveloppes des figures 2 à 4 dans le plan y= 0. Les figures 8 à 10 montrent des vues en coupe des enveloppes des figures 2 à 4 dans le plan z = 0; l'échelle de la figure 9 n'est pas la même que les échelles des figures 5, 7, 8 et 10. Les figures 6 et 9 confirment la discussion des directions libres de la configuration C₀, évoquées ci-dessus. Les figures 8 et 10 confirment que les directions libres des configurations C₋ et C₊ sont bien les bissectrices (1, -1, 0) et (1, 1,0) du plan (x, y).

A partir de l'une de ces trois configurations, il est possible d'atteindre un moment cinétique maximal dans une direction donnée, sans passer par une singularité interne. Ceci apparaît de la superposition des figures 5, 6 et 7 d'une part ou 8, 9 ou 10 d'autre part. Le choix d'une configuration peut s'effectuer de la façon suivante : on considère une direction du moment cinétique, repérée par une élévation δ et un azimut λ. L'élévation est l'angle que forme la direction avec l'axe z; l'azimut est l'angle que forme la projection dans le plan (x, y) de la direction avec l'axe x. Si l'élévation δ est en valeur absolue supérieure à une valeur limite δₗᵢₘᵢₜₑ, alors on choisit la configuration C₀. Ceci revient à dire que le moment cinétique à générer est principalement suivant l'axe z; la configuration C₀ de la figure 1 est alors une configuration de départ adaptée. Sur la figure 6, on se trouve dans la partie supérieure ou inférieure du "sablier" que constitue l'enveloppe de la configuration Cₒ.

Si l'élévation est en valeur absolue inférieure ou égale à la valeur limite δₗᵢₘᵢₜₑ, on utilise une des configurations de référence C₊ ou C₋. Le choix de l'une ou l'autre de ces configurations dépend de l'azimut; si l'azimut de la tangente est positif, on peut choisir la configuration C₊ et sinon la direction C₋. Autrement dit, on choisit la configuration C₊ dans le quadrant du plan (x, y) entre les axes x positif et y positif, ainsi que dans le quadrant du plan (x, y) entre les axes x négatif et y négatif; sur la figure 10, il apparaît clairement que l'enveloppe de la configuration C₊ couvre bien ces quadrants - alors que l'enveloppe de la configuration C₋ (figure 8) ou de la configuration C₀ (figure 9) ne le couvre pas. Inversement, on choisit la configuration C₋ dans le quadrant du plan (x, y) entre les axes x positif et y négatif, ainsi que dans le quadrant du plan (x, y) entre les axes x négatif et y positif. Dans tous les cas, la configuration de référence choisie permet d'atteindre une valeur maximale du moment cinétique sans singularité interne.

On notera que la discussion qui précède porte essentiellement sur des valeurs maximales du moment cinétique dans une direction donnée; si la valeur du moment cinétique à obtenir est faible, il peut être possible de l'obtenir à partir d'une configuration de départ quelconque. Dans ce cas, toute configuration de référence convient pour la manoeuvre. Ainsi, comme le montre la figure 9, la configuration C₀ permet d'atteindre sans singularité des moments cinétiques dans le plan (x, y), s'ils sont inférieurs en norme à 20 Nms.

L'exemple de la figure 1 montre, pour une structure donnée d'un système d'actionneurs gyroscopiques, qu'il est possible de définir des configurations de référence; pour toute direction du moment cinétique, il existe une configuration de référence à partir de laquelle on peut atteindre une valeur maximale du moment cinétique dans cette direction donnée, sans passer par une singularité interne. L'exemple de la figure 1 fournit les configurations possibles pour un système d'actionneurs gyroscopiques pyramidal; il serait aussi possible d'ajouter d'autres configurations aux configurations de référence proposées.

Plus généralement, les configurations de référence peuvent être déterminées expérimentalement pour un système d'actionneurs gyroscopiques donné, qui présenterait une structure différente. On considère pour cela l'ensemble des configurations qui présentent le moment cinétique recherché au repos - un moment cinétique nul dans l'exemple de la figure 1 -; pour une configuration donnée, on cherche, dans chaque direction possible, s'il est possible d'atteindre une valeur maximale du moment cinétique sans rencontrer de singularités. On détermine ainsi pour une configuration l'ensemble des directions libres. On ajoute cette configuration à l'ensemble des configurations de référence; cet ensemble de configurations présente un ensemble de directions libres. On considère ensuite une autre configuration, et l'on cherche pour cette configuration, si dans une direction qui n'est pas encore dans l'ensemble des directions libres, il est possible d'atteindre une valeur maximale du moment cinétique sans rencontrer de singularités. Chaque ajout d'une configuration à l'ensemble des configurations de référence augmente le nombre de directions couvertes. On obtient à la fin du processus un ensemble de configurations de référence permettant d'atteindre sans singularité toute direction de l'espace. Cet ensemble peut être optimisé, si certaines configurations font double emploi.

Ainsi, dans l'exemple de la figure 1, on part de la configuration C₀, qui permet d'atteindre les directions autour des axes z positif et z négatif. On ajoute ensuite successivement les configurations C₊ et C₋.

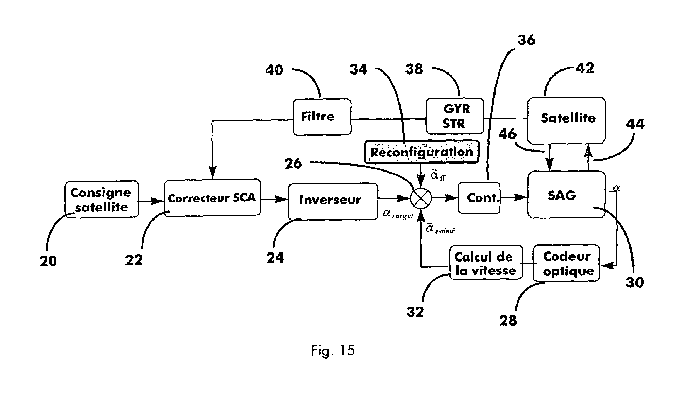

Dans tous les cas, il est possible pour un système d'actionneurs gyroscopiques de définir un ensemble de configurations de référence, en nombre fini. Toute manoeuvre - c'est-à-dire toute génération d'un moment cinétique - peut être réalisée à partir d'une configuration de référence. Si le système d'actionneurs gyroscopiques n'est pas dans une configuration proche de la configuration de référence choisie, il suffit alors de passer de la configuration de référence actuelle à la configuration choisie; ce passage peut s'effectuer comme expliqué en référence à la figure 15, en injectant en boucle ouverte une trajectoire prédéterminée dans le système de contrôle des cardans des actionneurs. On notera dans ce contexte que le système d'actionneurs gyroscopiques est en régime normal dans une configuration qui est proche d'une configuration de référence; de fait, si l'on part d'une configuration de référence, il est possible de revenir à une telle configuration de référence après avoir généré le moment cinétique nécessaire à la manoeuvre. Ceci est assuré par la loi de guidage choisi; la pseudo-inverse de Moore-Penrose assure un retour à la configuration de départ : en effet, elle minimise l'énergie nécessaire pour passer d'un moment cinétique nul à un moment cinétique donné; le trajet inverse s'effectue donc à énergie minimale, et ramène le système d'actionneurs dans la même configuration. En pratique, le système d'actionneurs en fin de manoeuvre se trouve toujours au voisinage d'une configuration de référence, s'il était avant la manoeuvre au voisinage de cette configuration. Ceci a pour conséquence qu'il est facile de reconnaître la configuration de référence au voisinage de laquelle le système d'actionneurs se trouve à un instant donné.

Comme le nombre de configurations de référence est fini - trois dans le cas de l'exemple de la figure 1 - il existe un nombre fini de passages possibles; il est donc possible de prévoir à l'avance des profils permettant de passer d'une configuration vers une configuration de référence. Dans l'exemple de la figure 1, on peut ainsi définir trois profils; avec leurs opposés, ces trois profils permettent de passer de l'une quelconque des trois configurations de référence à une autre des trois configurations de référence; le tableau ci-dessous indique la configuration de référence initiale, la configuration de référence finale, et le profil utilisé.

| Conf. Initiale | Configuration finale | | |
|---|---|---|---|
| | C₊ | C₀ | C₋ |
| C₊ | - | Opposé du profil 1 | Opposé du profil 2 |
| C₀ | Profil 1 | - | Opposé du profil 3 |
| C₋ | Profil 2 | Profil 3 | - |

En d'autres termes, le profil 1 permet de passer de la configuration C₀ à la configuration C₊; le profil 2 permet de passer de la configuration C₋ à la configuration C₊; le profil 3 permet de passer de la configuration C₋ à la configuration C₀.

De ce fait, il est possible de stocker des profils de passage, en nombre limité, qui peuvent être appliqués lorsqu'un changement de configuration est nécessaire. Comme le nombre de profils est limité, les profils peuvent être embarqués, sans qu'il soit nécessaire de les télécharger. Comme ces profils sont stockés, et déterminés à l'avance, ils peuvent être conçus pour présenter un contenu fréquentiel limité; ceci limite en conséquence l'excitation des modes souples de l'équipement, ainsi que de la structure du satellite. Il est notamment avantageux que chaque profil présente une vitesse nulle en début et en fin de profil; il est aussi avantageux que chaque profil présente une accélération nulle en début et en fin de profil.

Chaque profil peut en fait être décomposé en une pluralité de profils pour chaque actionneur; ainsi, le profil 1 permettant de passer de la configuration C₀ à la configuration C₊ permet:
- pour l'actionneur 4, de passer d'un angle de 0° à un angle α voisin de 40°;
- pour l'actionneur 14, de passer d'un angle de 0° à un angle α voisin de -40°;
- pour l'actionneur 16, de passer d'un angle de 0° à un angle α voisin de 40°;
- pour l'actionneur 18, de passer d'un angle de 0° à un angle α voisin de -40°.

On décrit à titre d'exemple en référence aux figures 1 à 14 un profil utilisé pour passer dans un actionneur gyroscopique d'un angle de 0° à 40°. Le profil est généré en (1-cos) à partir de la dérivée troisième de la position angulaire du cardan de l'actionneur. Les paramètres du profil sont le temps de montée à couple maximal, l'accélération maximale, la vitesse maximale ainsi que le débattement angulaire souhaité - 40° dans l'exemple. Le profil proposé dans l'exemple est un profil aussi court que possible, dans lequel les valeurs maximales admises de la vitesse angulaire et de l'accélération angulaire sont atteintes. Un tel profil présente l'avantage d'une durée aussi brève que possible en respectant les contraintes de fonctionnement du système; il est alors possible sans perturbations d'appliquer le profil au début de chaque manoeuvre, en superposition avec la manoeuvre. La durée faible du profil devant la durée de la manoeuvre permet d'éviter toute singularité, et de ne pas ou peu perturber le système de commande. Cette superposition évite de procéder à une reconfiguration avant la manoeuvre. Une durée du profil de l'ordre de 1 s est typiquement faible devant la durée de la manoeuvre, qui peut être de l'ordre de 5 à 20 s. Dans ce cas, la durée de la manoeuvre est inférieure à 20% voire 10% de la durée de la manoeuvre. Comme indiqué plus haut, une valeur du moment cinétique faible peut être obtenue à partir de toute configuration, sans risque de singularité; les manoeuvres courtes correspondantes, d'une durée typique de 1 ou 2 s ne nécessitent pas de passage de la configuration de référence à une autre configuration.

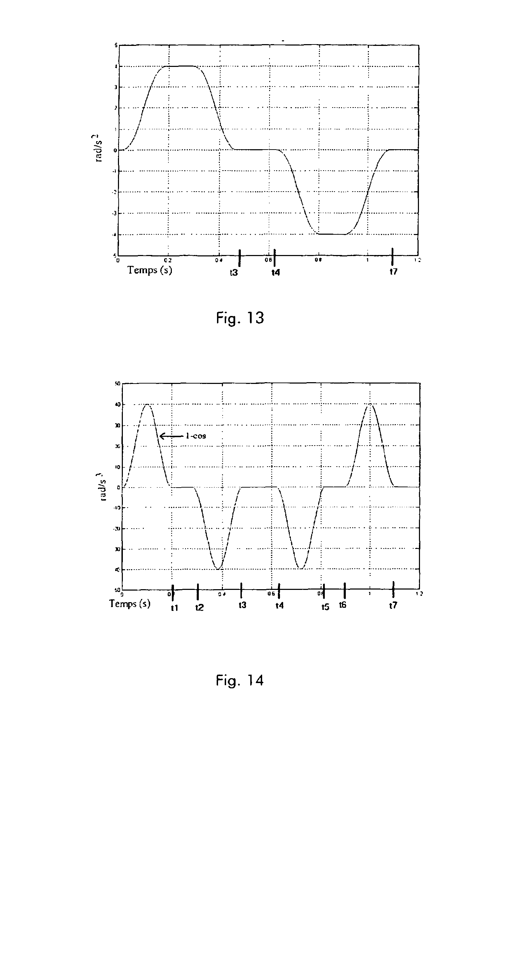

La figure 14 est un graphe de la dérivée troisième de l'angle d'un actionneur gyroscopique. En abscisse est porté le temps, et en ordonnées la dérivée troisième, en radians/³. Le graphe de la figure 14 présente trois parties. La première partie - sur la figure entre 0 et t₃ - correspond à la montée en vitesse pour atteindre la vitesse angulaire maximale, qui apparaît sur la figure 12; pendant cette première partie, la dérivée troisième est successivement positive de 0 à t₁, constante de t₁ à t₂, puis négative de t₂ à t₃; comme le montre la figure 13, cette première partie correspond à une accélération jusqu'à une accélération maximale, puis à une décélération pour atteindre une accélération nulle lorsque la vitesse atteint une vitesse maximale. Cette première partie présente typiquement une durée t₃ de l'ordre de 0,2 à 1 s. Dans l'exemple, la première partie est constituée de la concaténation d'une fonction en A(1-cos(t)) entre 0 et t₁, avec A un réel et t le temps, d'une fonction constante et nulle entre t₁ et t₂, et d'une fonction -A(1-cos(t-t₂) entre t₂ et t₃; la valeur de la constante A dépend de l'accélération maximale admise par le système, qui est atteinte à l'instant t₁. La durée t₂ - t₁ dépend de la vitesse maximale admise, et est ajustée pour que la vitesse maximale soit atteinte à l'instant t₃.

La deuxième partie du graphe - sur la figure entre t₃ et t₄ - correspond à la plage de rotation à la vitesse maximale. La durée de cette plage de rotation à vitesse maximale dépend du débattement angulaire à obtenir; autrement dit, une fois déterminées les premières et troisième parties, la durée de la troisième partie peut être adaptée en fonction de l'angle à obtenir.

La troisième partie du graphe - entre les instants t₄ et t₇ est essentiellement symétrique de la première partie; elle correspond à la décélération depuis la vitesse maximale jusqu'à une vitesse nulle; comme dans la première partie, on décélère pour atteindre la valeur maximale négative admise de l'accélération, puis on réduit (en valeur absolue) l'accélération pour atteindre une accélération nulle en fin de la troisième période.

La figure 13 montre un graphe de l'accélération angulaire, avec le temps en abscisse et l'accélération en radians/s² en ordonnées. On reconnaît sur la figure la première partie, dans laquelle l'accélération croît jusqu'à atteindre une valeur maximale - de 4 radians/s² dans l'exemple - puis décroît jusqu'à une valeur nulle. Pendant la deuxième partie, l'accélération est nulle. Pendant la troisième partie, l'accélération diminue jusqu'à atteindre une valeur négative maximale, reste constante puis croît jusqu'à une valeur nulle.

La figure 12 montre un graphe de la vitesse angulaire, avec le temps en abscisse et la vitesse en radians/s en ordonnées. Pendant la première partie, la vitesse croît pour atteindre la vitesse maximale; le cardan se déplace à la vitesse maximale entre t₃ et t₄, puis la vitesse décroît entre t₄ et t₇ jusqu'à une vitesse nulle.

La figure 11 montre un graphe de l'angle en fonction du temps. L'angle croît de façon monotone de 0° à 40°. On notera sur les graphes des figures 12 et 13 que la vitesse et l'accélération sont nulles tant au début du profil qu'à la fin du profil.

Les figures 1 à 14 ne montrent qu'un exemple de profil. Il est notamment possible d'obtenir un profil présentant en début comme en fin des vitesses et des accélérations nulles avec une fonction autre que la fonction 1-cos(t) proposée à la figure 14; on pourrait par exemple utiliser une fonction polynomiale pour générer la courbe de la figure 14, puis l'intégrer pour obtenir les courbes des figures 11, 12 et 13.

Les figures 11 à 14 ne montrent qu'une courbe permettant de déplacer un actionneur d'un angle de l'ordre de 40°. Il est possible d'utiliser une courbe similaire pour assurer le déplacement de l'actionneur d'un angle de -40°, en prenant simplement l'opposée de la courbe proposée. Ainsi, les figures proposent un exemple d'un profil permettant de passer d'une configuration à une autre configuration. On notera aussi que les paramètres proposés en référence à ces figures permettent de faire varier le profil pour l'adapter à la variation angulaire recherchée, à la vitesse maximale de l'actionneur, à l'accélération maximale ou à la durée du profil.

Ainsi, la définition d'un profil expliquée en référence aux figures 11 à 14 permet de passer d'une configuration de référence à une autre configuration de référence. Les profils peuvent être calculés à l'avance et stockés; de ce point de vue, il n'est pas nécessaire de stocker l'ensemble des courbes représentées aux figures 11 à 14, mais simplement une courbe d'angle ou de vitesse, en fonction du mode de pilotage utilisé pour les actionneurs. On peut aussi stocker une courbe de couple appliqué aux moteurs des cardans des actionneurs, ou encore une courbe d'intensité du courant appliqué aux moteurs des cardans des actionneurs. Le choix d'un format ou d'un autre dépend de la commande appliquée au système d'actionneurs.

La courbe peut être stockée sous forme d'une table de valeurs de vitesse pour différents instants; on peut aussi stocker la courbe sous une forme analytique. Ceci peut notamment être intéressant lorsque les paramètres de la courbe - et notamment le débattement angulaire - peuvent varier. La définition à l'avance des profils et leur stockage permet d'embarquer l'ensemble des paramètres de navigation, tout en évitant les singularités. Par rapport à la solution de guidage global continu, le procédé décrit plus haut n'implique pas de calcul lourd : il suffit de déterminer la configuration de référence la plus proche, de choisir la configuration de référence en fonction de la manoeuvre à venir, et d'appliquer un profil prédéfini. Il n'est donc pas non plus nécessaire de télécharger les résultats d'un calcul, et les éléments nécessaires au guidage peuvent être embarqués. A l'inverse de la solution de guidage local de l'état de la technique, le procédé proposé permet d'éviter efficacement les singularités, et présente un réel aspect prédictif.

Enfin, par rapport à la solution proposée dans le document FR-A-2 786 283, le procédé décrit plus haut n'implique pas de changements brutaux de vitesses et d'angles des actionneurs. Le procédé est plus simple à mettre en oeuvre, puisqu'il n'implique pas de calcul de la configuration finale ou de la configuration initiale; il suffit d'identifier par exemple dans une table la configuration de référence adaptée à la manoeuvre, de déterminer la configuration de référence courante, et de lire dans une table le profil permettant de passer de l'une à l'autre.

Le procédé n'implique pas de contrainte sur la vitesse cardan : la solution proposée dans FR-A-2 786 283 repose fondamentalement sur l'idée que l'on peut négliger le régime transitoire de changement de configuration, du fait de sa faible longueur; il est donc indispensable que la vitesse cardan dans ce régime soit importante - d'autant plus que le système de contrôle d'attitude est coupé. A l'inverse, le procédé proposé ne repose pas sur un régime transitoire négligé.

Le procédé propose de suivre en continu un profil satellite, sans générer de moments cinétiques parasite. A tout instant dans le profil permettant de passer d'une configuration de référence à une autre configuration de référence, le moment cinétique total du système est nul. Tel n'est pas le cas dans la solution proposée dans FR-A-2 786 283 : on applique aux actionneurs des variations d'angles qui génèrent nécessairement des moments cinétiques parasites; ceux-ci ne peuvent être négligés - d'après ce document - que du fait de leur faible durée. Ceci explique que le procédé décrit ici n'implique pas de tranquillisation comme la solution proposée dans FR-A-2 786 283.

Enfin, la solution de FR-A-2 786 283 implique des vitesses cardans élevées; le système d'actionneurs n'est pas seulement dimensionné par les couples à produire, mais aussi par la nécessité de permettre des vitesses cardans élevées pendant la reconfiguration des cardans. Ces vitesses élevées sont équivalentes à une capacité à produire un couple important. Le système est surdimensionné pour permettre la reconfiguration. A l'inverse, le procédé décrit ici ne suppose pas des vitesses élevées; il est intéressant de limiter la durée de la reconfiguration, mais ce n'est pas indispensable.

On décrit en référence à la figure 6 un exemple de boucle de commande pour un système d'actionneurs gyroscopiques du type de celui de la figure 1. Est appliquée en entrée 20 de la boucle une consigne satellite - par exemple un profil de guidage en quaternion et en vitesse. Cette consigne est appliquée à un correcteur du système de contrôle d'attitude 22. Ce correcteur reçoit par ailleurs un signal de mesure décrit dans la suite. A partir de la consigne et du signal de mesure, le correcteur calcule un signal d'erreur; ce signal d'erreur est toujours en quaternion et en vitesse; il est appliqué à un inverseur 24. L'inverseur 24 calcule à partir du signal d'erreur une commande d'angles à appliquer aux différents actionneurs. On peut utiliser pour l'inverseur 24 un algorithme basé sur la pseudo-inverse de Moore-Penrose. Il présente l'avantage de minimiser la consommation électrique, mais a tendance si elle est utilisée seule à diriger le système d'actionneurs gyroscopiques vers des configurations singulières. L'inverseur fournit en sortie des signaux de vitesse angulaire cible pour les différents actionneurs. Ces signaux sont appliqués à une entrée de sommation d'un soustracteur 26. Celui-ci reçoit par ailleurs sur une entrée de soustraction une vitesse angulaire estimée des différents actionneurs. La vitesse angulaire peut être estimée à l'aide d'un codeur optique 28 mesurant les angles des actionneurs du système 30; les valeurs d'angles mesurées sont alors appliquées à un calculateur de vitesse 32 et fournies en sortie à l'entrée de soustraction du soustracteur 26.

Le soustracteur reçoit aussi sur une autre entrée de sommation les signaux du profil 34; ces signaux sont donc injectés, dans la boucle de régulation du système d'actionneurs gyroscopiques. On comprend ici l'utilité dans cette configuration d'un stockage des profils sous forme d'une table de vitesses, qui est directement injectable dans le circuit de la figure 15. Les signaux du profil sont injectés, en début de manoeuvre ou avant le début de la manoeuvre, lorsque l'on détecte que la configuration actuelle du système d'actionneurs gyroscopiques ne permet pas la manoeuvre sans risque de singularité - autrement dit, que le moment cinétique à générer n'est pas dans une direction libre pour la configuration de référence la plus proche de la configuration courante.

La somme des signaux de profil de reconfiguration et de la différence entre les signaux de la loi de guidage et les signaux de vitesse angulaire estimée est appliquée aux actionneurs du système 30, à travers un contrôleur de cardans 36.

Par ailleurs, l'estimation de l'état réel du satellite, appliquée au correcteur 22, provient des mesures combinées d'un système gyrostellaire 38; celui-ci sert de capteur d'attitude du satellite. Son signal de sortie est appliqué au correcteur à travers un filtre 40. La figure 15 montre encore schématiquement le satellite 42; la flèche 44 indique le couple appliqué au satellite par le système d'actionneurs; la flèche 46 indique le couple appliqué aux cardans du système d'actionneurs gyroscopiques par les changement d'attitude du satellite.

La commande de la figure 15 n'est qu'un exemple d'une commande possible; on notera simplement qu'il est proposé d'injecter en boucle ouverte, dans cette commande du système d'actionneurs gyroscopiques, le profil de reconfiguration. Ce profil est appliqué sans qu'il ne soit nécessaire de désactiver la commande d'attitude du satellite, comme cela est proposé dans le document FR-A-2 786 283.

Un satellite mettant en oeuvre le procédé décrit ici comprend donc un système d'actionneurs gyroscopiques, qui présente un ensemble de configurations de référence, comme expliqué plus haut. En outre, le satellite présente une mémoire ou un autre moyen de stockage; la mémoire contient les profils de variation des angles des actionneurs permettant de passer d'une configuration de référence à une autre. Le satellite présente aussi avantageusement une boucle de commande du type de celle de la figure 15, avec une entrée pour l'application d'un profil.

Bien entendu, la présente invention n'est pas limitée aux exemples et modes de réalisation décrits et représentés, mais elle est susceptible de nombreuses variantes accessibles à l'homme de l'art. Dans les exemples, on a considéré un système à quatre actionneurs; il est bien sûr possible de changer le nombre d'actionneurs, tout comme leur configuration. La boucle à rétroaction pour le contrôle des actionneurs représentée à la figure 15 peut être modifiée; enfin, bien que le profil de changement de configuration puisse être superposé au début de la manoeuvre, il est aussi possible de procéder au changement de reconfiguration avec le début de la manoeuvre.

## Revendications

1. Un procédé de guidage d'un système d'actionneurs gyroscopiques comprenant:
- la définition de configurations de référence, un moment cinétique pouvant être généré sans passer par une singularité à partir d'au moins une configuration de référence;
- la définition de profils permettant de passer d'une configuration de référence à une autre;
**caractérisé par**
- les paramètres du profil étant le temps de montée à couple maximal, l'accélération maximale, la vitesse maximale ainsi que le débattement angulaire souhaité ;
- le stockage desdits profils dans le satellite ;
- - pour générer un moment cinétique, le choix d'une configuration de référence à partir de laquelle le moment cinétique peut être généré sans passer par une singularité; et
- si la configuration courante du système d'actionneurs gyroscopiques n'est pas proche de la configuration de référence, le passage de la configuration actuelle à la configuration de référence à l'aide d'un profil stocké.

2. Le procédé de la revendication 1, **caractérisé en ce que** le système d'actionneurs gyroscopiques est piloté par un système de contrôle en boucle fermé, et **en ce que** l'étape de passage s'effectue en injectant un profil stocké dans le système de contrôle.

3. Le procédé de la revendication 1 ou 2, **caractérisé en ce qu'**un profil est défini par des vitesses des cardans des actionneurs gyroscopiques.

4. Le procédé de la revendication 1 ou 2, **caractérisé en ce qu'**un profil est défini par des couples des moteurs des cordons des actionneurs gyroscopiques.

5. Le procédé de la revendication 1 ou 2, **caractérisé en ce qu'**un profil est défini par des intensité des courants appliqués aux moteurs des cardans des actionneurs gyroscopiques.

6. Le procédé de l'une des revendications 1 à 5, **caractérisé en ce qu'**un profil présente une vitesse des cardans des actionneurs nulle en début comme en fin de profil.

7. Le procédé de l'une des revendications 1 à 6, **caractérisé en ce qu'**un profil présente une accélération des cardans des actionneurs nulle en début comme en fin de profil.

8. Le procédé de l'une des revendication 1 à 7, **caractérisé en ce que** le profil présente une vitesse des cardans des actionneurs croissante puis décroissante, la vitesse atteignant la vitesse maximale admise dans le système d'actionneurs gyroscopiques.

9. Le procédé de la revendication 8, **caractérisé en ce que** l'accélération maximale admise dans le système d'actionneurs gyroscopiques est atteinte lorsque la vitesse est croissante et lorsque la vitesse est décroissante.

10. Le procédé de l'une des revendications 1 à 9, **caractérisé en ce que** l'étape de passage s'effectue en même temps que le début de la génération du moment cinétique.

11. Le procédé de l'une des revendications 1 à 10, **caractérisé en ce que** l'étape de passage présente une durée inférieure à 20%, de préférence inférieure à 10% de la durée de génération du moment cinétique.

12. Un satellite présentant
- un système d'actionneurs gyroscopiques (4, 14, 16, 18), ayant un ensemble de configurations de référence, un moment cinétique pouvant être généré sans passer par une singularité à partir d'au moins une configuration de référence;
**caractérisé par**
- des moyens de stockage de profils dans le satellite ;
- des profils permettant de passer d'une configuration de référence à une autre, les profils étant stockés dans le satellite.

13. Le satellite de la revendication 12, **caractérisé en ce qu'**il présente un système de contrôle en boucle fermée pour le système d'actionneurs gyroscopiques et une entrée en boucle ouverte appliquant un des profils au système d'actionneurs gyroscopiques.

14. Le satellite de la revendication 12 ou 13, **caractérisé en ce qu'**un profil est défini par des vitesses des cardans des actionneurs gyroscopiques.

15. Le satellite de la revendication 12 ou 13, **caractérisé en ce qu'**un profil est défini par des couples des moteurs des cardans des actionneurs gyroscopiques.

16. Le satellite de la revendication 12 ou 13, **caractérisé en ce qu'**un profil est défini par des intensité des courants appliqués aux moteurs des cardans des actionneurs gyroscopiques.

## Claims

1. A guidance process for a system of gyroscopic actuators comprising:
- defining reference configurations, an angular momentum that can be generated without passing through a singularity on the basis of at least one reference configuration;
- defining profiles making it possible to switch from one reference configuration to another;
**characterized by**
- the parameters of the profile being the rise time to maximum torque, the maximum acceleration, the maximum speed as well as the desired angular swing;
- storing said profiles in the satellite;
- to generate an angular momentum, choosing a reference configuration on the basis of which the angular momentum can be generated without passing through a singularity; and
- if the current configuration of the system of gyroscopic actuators is not close to the reference configuration, switching from the current configuration to the reference configuration with the aid of a stored profile.

2. The process of Claim 1, **characterized in that** the system of gyroscopic actuators is driven by a closed-loop control system, and **in that** the switching step is performed by injecting a stored profile into the control system.

3. The process of Claim 1 or 2, **characterized in that** a profile is defined by speeds of the gimbals of the gyroscopic actuators.

4. The process of Claim 1 or 2, **characterized in that** a profile is defined by torques of the motors of the gimbals of the gyroscopic actuators.

5. The process of Claim 1 or 2, **characterized in that** a profile is defined by intensities of the currents applied to the motors of the gimbals of the gyroscopic actuators.

6. The process of one of Claims 1 to 5, **characterized in that** a profile exhibits a zero speed of the gimbals of the actuators both at the start and at the end of the profile.

7. The process of one of Claims 1 to 6, **characterized in that** a profile exhibits a zero acceleration of the gimbals of the actuators both at the start and at the end of the profile.

8. The process of one of Claims 1 to 7, **characterized in that** the profile exhibits an increasing then decreasing speed of the gimbals of the actuators, the speed attaining the maximum speed permitted in the system of gyroscopic actuators.

9. The process of Claim 8, **characterized in that** the maximum acceleration permitted in the system of gyroscopic actuators is attained when the speed is increasing and when the speed is decreasing.

10. The process of one of Claims 1 to 9, **characterized in that** the switching step is performed at the same time as the start of the generation of the angular momentum.

11. The process of one of Claims 1 to 10, **characterized in that** the switching step exhibits a duration of less than 20%, preferably less than 10%, of the duration of generation of the angular momentum.

12. A satellite exhibiting
- a system of gyroscopic actuators (4, 14, 16, 18), having a set of reference configurations, an angular momentum that can be generated without passing through a singularity on the basis of at least one reference configuration;
**characterized by**
- means for storing profiles in the satellite;
- profiles making it possible to switch from one reference configuration to another, the profiles being stored in the satellite.

13. The satellite of Claim 12, **characterized in that** it exhibits a closed-loop control system for the system of gyroscopic actuators and an open-loop input applying one of the profiles to the system of gyroscopic actuators.

14. The satellite of Claim 12 or 13, **characterized in that** a profile is defined by speeds of the gimbals of the gyroscopic actuators.

15. The satellite of Claim 12 or 13, **characterized in that** a profile is defined by torques of the motors of the gimbals of the gyroscopic actuators.

16. The satellite of Claim 12 or 13, **characterized in that** a profile is defined by intensities of the currents applied to the motors of the gimbals of the gyroscopic actuators.

## Patentansprüche

1. Leitverfahren für ein gyroskopisches Betätigungssystem, umfassend:
- die Definition von Referenzkonfigurationen, wobei ein kinetisches Moment erzeugt werden kann, ohne über eine Singularität ausgehend von mindestens einer Referenzkonfiguration zu gehen;
- die Definition von Profilen, die es ermöglichen, von einer Referenzkonfiguration zu einer anderen überzugehen;
**gekennzeichnet durch**
- die Parameter des Profils, die die Anstiegzeit zum maximalen Moment, die maximale Beschleunigung, die maximale Geschwindigkeit sowie der gewünschte Winkelausschlag sind;
- die Speicherung der Profile im Satelliten;
- zur Erzeugung eines kinetischen Moments, die Auswahl einer Referenzkonfiguration, aus der das kinetische Moment erzeugt werden kann, ohne über eine Singularität zu gehen; und
- den Übergang von der aktuellen Konfiguration zur Referenzkonfiguration mit Hilfe eines gespeicherten Profils, wenn die laufende Konfiguration des Systems von gyroskopischen Betätigungselementen nicht nahe der Referenzkonfiguration ist.

2. Verfahren nach Anspruch 1, **dadurch gekennzeichnet, dass** das gyroskopische Betätigungssystem von einem Kontrollsystem in geschlossener Schleife gesteuert wird, und dass der Schritt des Übergangs erfolgt, wobei ein gespeichertes Profil in das Kontrollsystem eingeleitet wird.

3. Verfahren nach Anspruch 1 oder 2, **dadurch gekennzeichnet, dass** ein Profil durch Geschwindigkeiten der Kardanantriebe der gyroskopischen Betätigungselemente definiert ist.

4. Verfahren nach Anspruch 1 oder 2, **dadurch gekennzeichnet, dass** ein Profil durch Paare der Motoren der Kardanantriebe der gyroskopischen Betätigungselemente definiert ist.

5. Verfahren nach Anspruch 1 oder 2, **dadurch gekennzeichnet, dass** ein Profil durch Stromstärken definiert ist, die an die Motoren der Kardanantriebe der gyroskopischen Betätigungselemente angelegt werden.

6. Verfahren nach einem der Ansprüche 1 bis 5, **dadurch gekennzeichnet, dass** ein Profil eine Geschwindigkeit der Kardanantriebe der Betätigungselemente gleich Null am Anfang wie am Ende des Profils aufweist.

7. Verfahren nach einem der Ansprüche 1 bis 6, **dadurch gekennzeichnet, dass** ein Profil eine Beschleunigung der Kardanantriebe der Betätigungselemente gleich Null am Anfang wie am Ende des Profils aufweist.

8. Verfahren nach einem der Ansprüche 1 bis 7, **dadurch gekennzeichnet, dass** das Profil eine steigende dann sinkende Geschwindigkeit der Kardanantriebe der Betätigungselemente aufweist, wobei die Geschwindigkeit die maximal zulässige Geschwindigkeit im gyroskopischen Betätigungssystem aufweist.

9. Verfahren nach Anspruch 8, **dadurch gekennzeichnet, dass** die maximal zulässige Beschleunigung in dem gyroskopischen Betätigungssystem erreicht wird, wenn die Geschwindigkeit steigend ist und wenn die Geschwindigkeit sinkend ist.

10. Verfahren nach einem der Ansprüche 1 bis 9, **dadurch gekennzeichnet, dass** der Durchgangsschritt gleichzeitig mit dem Beginn der Erzeugung des kinetischen Moments erfolgt.

11. Verfahren nach einem der Ansprüche 1 bis 10, **dadurch gekennzeichnet, dass** der Durchgangsschritt eine Dauer unter 20 %, vorzugsweise unter 10 %, von der Dauer der Erzeugung des kinetischen Moments aufweist.

12. Satellit, umfassend:
- ein gyroskopisches Betätigungssystem (4, 14, 16, 18), das eine Gesamtheit von Referenzkonfigurationen aufweist, wobei ein kinetisches Moment erzeugt werden kann, ohne über eine Singularität ausgehend von mindestens einer Referenzkonfiguration zu gehen;
**gekennzeichnet durch**
- Mittel zur Speicherung von Profilen im Satelliten;
- Profile, die es ermöglichen, von einer Referenzkonfiguration zu einer weiteren überzugehen, wobei die Profile im Satelliten gespeichert sind.

13. Satellit nach Anspruch 12, **dadurch gekennzeichnet, dass** er ein Kontrollsystem in geschlossener Schleife für das gyroskopische Betätigungssystem und einen Eingang in offener Schleife aufweist, der eines der Profile an das gyroskopische Betätigungssystem anlegt.

14. Satellit nach Anspruch 12 oder 13, **dadurch gekennzeichnet, dass** ein Profil durch Geschwindigkeiten der Kardanantriebe der gyroskopischen Betätigungselemente definiert ist.

15. Satellit nach Anspruch 12 oder 13, **dadurch gekennzeichnet, dass** ein Profil durch Paare der Motoren der Kardanantriebe der gyroskopischen Betätigungselemente definiert ist.

16. Satellit nach Anspruch 12 oder 13, **dadurch gekennzeichnet, dass** ein Profil durch Stromstärken definiert ist, die an die Motoren der Kardanantriebe der gyroskopischen Betätigungselemente angelegt werden.
